Europäisches Patentamt

**European Patent Office**

Office européen des brevets

(11) Veröffentlichungsnummer: **0 085 952**
**B1**

(12) **EUROPÄISCHE PATENTSCHRIFT**

(45) Veröffentlichungstag der Patentschrift:
**30.03.88**

(51) Int. Cl.⁴: **F 16 L 39/02**

(21) Anmeldenummer: **83101015.2**

(22) Anmeldetag: **03.02.83**

(54) Mehradriges hydraulisches oder pneumatisches Kabel mit Mehrfachschlauchkupplung.

(30) Priorität: **06.02.82 DE 3204102**

(43) Veröffentlichungstag der Anmeldung:
**17.08.83 Patentblatt 83/33**

(45) Bekanntmachung des Hinweises auf die Patenterteilung:
**30.03.88 Patentblatt 88/13**

(84) Benannte Vertragsstaaten:
**BE DE FR GB**

(56) Entgegenhaltungen:
**DE - A - 2 845 958**
**US - A - 4 113 287**

(73) Patentinhaber: **Gewerkschaft Eisenhütte Westfalia GmbH, Industriestrasse 1, D-4670 Lünen (DE)**

(72) Erfinder: **Weirich, Walter, Tassiloweg 5, D-4600 Dortmund (DE)**
Erfinder: **Wollenhaupt, Peter, Weissdornweg 14, D-4670 Lünen-Horstmar (DE)**
Erfinder: **Meils, Jürgen, Borker Strasse 79, D-4670 Lünen (DE)**

(74) Vertreter: **Vollbach, Hans, Dipl.-Ing. et al, Patentanwälte Dipl.-Ing. Buschhoff Dipl.Ing Hennicke Dipl.-Ing. Vollbach Kaiser-Wilheim-Ring 24, D-5000 Köln 1 (DE)**

**Beschreibung**

Die Erfindung betrifft ein mehradriges hydraulisches oder pneumatisches Kabel mit in einem flexiblen Mantelschlauch angeordneten flexiblen Leitungsadern, die mit an ihren Enden befestigten Steckerteilchen an eine Halteplatte angeschlossen sind, die in einem, vorzugsweise als Überwurfmutter ausgebildeten Kupplungsgehäuse angeordnet ist, welches mit dem Mantelschlauch über eine Verbindungshülse zugfest, jedoch frei drehbar verbunden ist, die aus zwei über eine Drehverbindung zugfest verbundenen, an ihren einander zugewandten Enden mit einem axialen Fortsatz ineinanderfassenden Hülsenteilen besteht, von denen das eine Hülsenteil als eine mit dem Mantelschlauch verbundene Klemmhülse und das andere Hülsenteil als Gehäuseanschlusshülse ausgebildet ist, die an ihrem in das Kupplungsgehäuse einfassenden Ende einen die Halteplatte rückwärtig abstützenden Ringflansch aufweist, der sich seinerseits rückseitig gegen ein Anschlagglied des Kupplungsgehäuses abstützt.

Mehradrige hydraulische oder pneumatische Kabel, die mit Mehrfach-Steckkupplungen ausgestattet sind und deren Leitungsadern geschützt in einem Mantelschlauch liegen, der endseitig die Kupplungsteile der Steckkupplung trägt, sind in verschiedenen Ausführungen bekannt und werden mit Vorteil vor allem zur Versorgung hydraulischer Systeme in Untertagebetrieben, insbesondere von Ausbausystemen u.dgl., eingesetzt (DE-A-2 059 576, DE-U-7 903 535). Bei diesen mehradrigen Kabeln ist der Mantelschlauch mittels einer als Klemmhülse ausgebildeten Verbindungshülse zugfest, jedoch drehbar mit dem Kupplungsgehäuse verbunden, das eine drehbare Halteplatte für die an den Leitungsadern befestigten Steckerteile aufnimmt, so dass keine Drehkräfte zwischen diesen Teilen übertragen werden und eine Verbindung erhalten wird, die bei den jeweiligen Einsatzbedingungen der Kabel und bei den unterschiedlichen Lagen der Anschlussarmaturen weitestgehend drehspannungsfrei ist.

Bei einem bekannten mehradrigen Kabel mit Steckkupplung, von dem die Erfindung ausgeht, ist das von einer Überwurfmutter gebildete, die Stecknippel mit einer Zentrier- und Haltescheibe aufnehmende Kupplungsgehäuse mit dem das Adernbündel aufnehmenden flexiblen Mantelschlauch über eine Verbindungshülse verbunden, die aus zwei über eine Drehverbindung gekuppelten Hülsenteilen besteht, von denen das eine als eine mit dem Mantelschlauch verbundene Klemmhülse und das andere als Gehäuseanschlusshülse ausgebildet ist, die von hinten in das Kupplungsgehäuse einfasst und sich in diesem an einem festen Innenbund abstützt (DE-A-2 845 958). Die Drehverbindung zwischen den beiden Hülsenteilen wird durch den Umgriff fester Flansche der Hülsenteile gebildet und gesichert. Diese Drehverbindung ist schwierig herzustellen; sie erlaubt auch keine einfache und rasche Demontage. Die Zentrier- und Haltescheiben für die Stecknippel der Leitungsadern sind mittels eines Sprengringes in dem Kupplungsgehäuse gesichert, der auf der der Verbindungshülse abgewandten Seite des Kupplungsgehäuses in einer Ringnut desselben sitzt. Der Sprengring muss daher bei geöffneter Kupplung von der Stirnseite des Kupplungsgehäuses her gelöst werden, wenn eine Demontage der Teile erfolgen soll. Dabei lässt sich jedoch das Kupplungsgehäuse nicht nach vorne von der Verbindungshülse abziehen. Vielmehr kann das Kupplungsgehäuse nur über die Verbindungshülse zurückgeschoben werden.

Ausgehend von einem mehradrigen hydraulischen oder pneumatischen Kabel mit Steckkupplung der angegebenen Art liegt der Erfindung die Aufgabe zugrunde, dieses Kabel mit seiner Steckkupplung bei Wahrung der drehspannungsfreien Verbindung von Mantelschlauch und Kupplungsgehäuse so auszubilden, dass sich bei möglichst kompakten Abmessungen der Kupplung und bei möglichst geringem Fertigungsaufwand eine vereinfachte Montage und Demontage der Teile erreichen lässt.

Diese Aufgabe wird erfindungsgemäss dadurch gelöst, dass

– die Klemmhülse und die Gehäuseanschlusshülse an der Drehverbindung mittels eines lösbaren Sicherungselementes leicht lösbar verbunden sind und dass

– das Kupplungsgehäuse rückseitig eine gehäuseausdrehung aufweist, in die die Gehäuseanschlusshülse mit ihrem Ringflansch von hinten einführbar ist, wobei das Anschlagglied leicht lösbar in der Gehäuseausdrehung angeordnet ist.

Bei dem erfindungsgemässen mehradrigen Kabel sind demgemäss die beiden Hülsenteile der Verbindungshülse an ihrer Drehverbindung mittels eines lösbaren Sicherungselementes leicht lösbar miteinander verbunden, so dass die Hülsenteile an der Drehverbindung leicht und rasch aneinander angeschlossen und bei Bedarf auch ohne Schwierigkeiten wieder voneinander getrennt werden können. Die Hülsenteile können dabei von einfacher Ausbildung sein und kleine Abmessungen erhalten. Sie lassen sich bei der Montage zusammenstecken und mit Hilfe eines einfachen Sicherungselementes unter Bildung der Drehverbindung zugfest verbinden. Darüber hinaus ist auch das die Gehäuseanschlusshülse bildende Hülsenteil von der Rückseite her leicht lösbar mit dem Kupplungsgehäuse bzw. der das Kupplungsgehäuse bildenden Überwurfmutter verbunden. Bei der Montage wird die gehäuseanschlusshülse von hinten in die rückseitige Gehäuseausdrehung des Kupplungsgehäuses eingeführt und mit Hilfe des eingesetzten Anschlaggliedes am Kupplungsgehäuse unter Wahrung der Drehbeweglichkeit zwischen Kupplungsgehäuse und Gehäuseanschlusshülse gesichert. Durch Lösen des Anschlaggliedes lässt sich das Kupplungsgehäuse nach vorne von der Anschlusshülse abziehen, wodurch die Stecknippel mit ihren Verbindungen zu der Anschlussplatte z.B. für die Durchführung von Reparaturmassnahmen, wie das Auswechseln einzelner Stecknippel oder Dichtungen, frei zugänglich werden. Die Lösbarkeit der beiden Hülsenteile untereinander und von dem Kupplungsgehäuse erleichtert den Anschluss der einzelnen Leitungsadern des Adernbündels an der Anschlussplatte. Die gesamte Steckkupplung kann mit verhältnismässig kleinen Abmessungen gebaut werden. Insbesondere kann das Kupplungsgehäuse verhältnismässig kleine axiale und radiale Abmessungen erhalten

Das lösbare Anschlagglied, welches die Verbindung zwischen dem Kupplungsgehäuse und der Gehäuseanschlusshülse innerhalb der Gehäuseausdrehung sichert, besteht zweckmässig aus einem Sprengring oder einem Schraubring. Für das die Drehverbindung der beiden Hülsenteile sichernde Sicherungselement kann mit Vorteil ein Schulterdraht verwendet werden, der über eine Tangentialöffnung des einen Hülsenteils in eine von Nuten der beiden Hülsenteile gebildete umlaufende Rille einführbar ist. Anstelle des Schulterdrahtes können aber auch andere einfache Sicherungselemente, z.B. ein Sprengring, ein lösbarer Anschlagring od.dgl., Verwendung finden, der an dem einen Hülsenteil angeordnet wird und einen Anschlag für einen Flansch od.dgl. des anderen Hülsenteils bildet.

Bei einer vorteilhaften Ausführungsform der Erfindung ist der genannte axiale Fortsatz von einer endseitigen Einziehung der Klemmhülse gebildet, wobei die Klemmhülse an dem über den Mantelschlauch vorstehenden Fortsatz eine grössere Wandstärke hat als auf dem den Mantelschlauch umschliessenden Bereich. Diese Anordnung bietet besondere Vorteile bei Verwendung des vorgenannten Schulterdrahtes zur Sicherung der Drehverbindung der beiden Hülsenteile. Durch die Anbringung der den Schulterdraht aufnehmenden Nut wird der verstärkte axiale Fortsatz nicht geschwächt.

Weiterhin empfiehlt es sich, die Gehäuseanschlusshülse innenseitig mit einer axial verlaufenden rillenartigen Wandeinziehung für den Bund eines Steckerteils zu versehen, dessen Durchmesser grösser ist als derjenige der anderen Steckerteile. Dieser dickere Steckerteil kann zugleich einen Positionierstift für das positionsgerechte Schliessen der Steckkupplung bilden. Der Eingriff des verstärkten Steckerteils in die rillenartige Wandeinziehung trägt dazu bei, die Verbindungshülse bei Wahrung der Drehverbindung mit kleinen Abmessungen zu fertigen.

Die Erfindung wird nachfolgend im Zusammenhang mit dem in der Zeichnung dargestellten bevorzugten Ausführungsbeispiel näher erläutert. In der Zeichnung zeigen:

Fig. 1 im Axialschnitt ein erfindungsgemässes mehradriges Kabel nebst seinem Kupplungsende;

Fig. 2 im Axialschnitt die bei der Schlauchkupplung nach Fig. 1 verwendete Gehäuseanschlusshülse;

Fig. 3 die Gehäuseanschlusshülse nach Fig. 2 in einer Stirnansicht;

Fig. 4 einen Schnitt nach Linie IV–IV der Fig. 2.

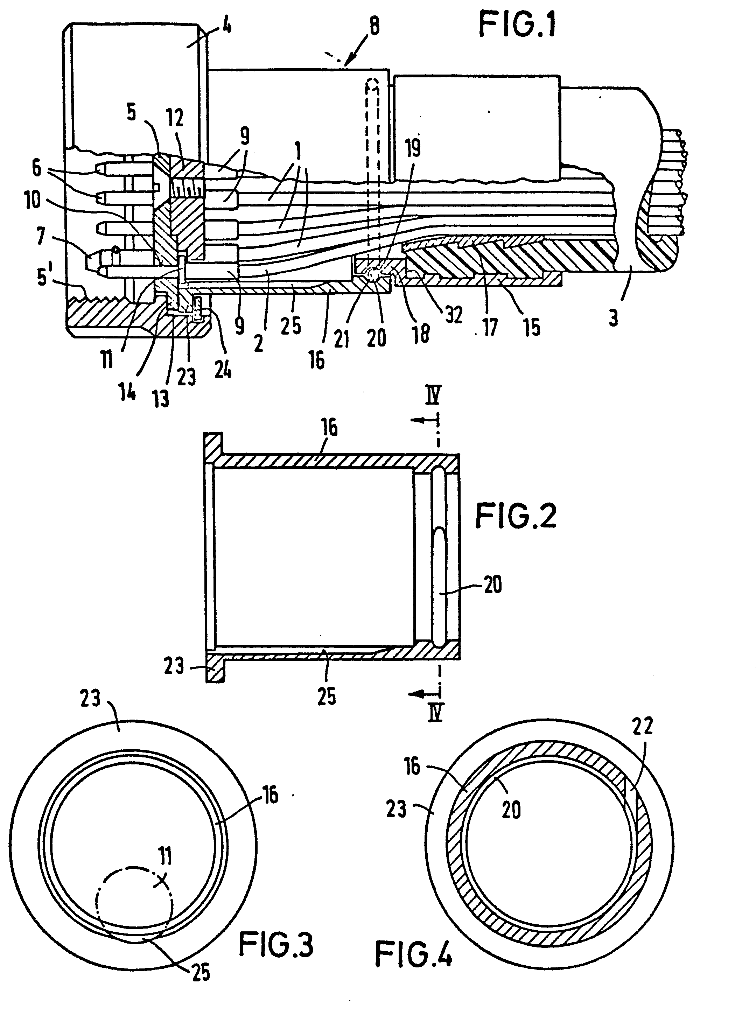

Das in der Fig. 1 bis 4 dargestellte mehradrige hydraulische oder pneumatische Kabel besteht aus einer Gruppe flexibler Leitungsadern 1 und einer weiteren, im Durchmesser grösseren flexiblen Leitungsader 2, die zu einem Adernbündel zusammengefasst im Inneren eines flexiblen Mantelschlauches 3 angeordnet sind. Die Leitungsader 2, deren Leitungsquerschnitt und Aussendurchmesser grösser ist als derjenige der druckführenden Leitungsadern 1, kann die hydraulische Rücklaufleitung des Systems bilden, wie dies an sich bekannt ist.

An den beiden Enden des flexiblen Mantelschlauches 3 sind die Kupplungsteile der mehrfachsteckkupplung angeschlossen. Diese Kupplungsteile bestehen aus einem Kupplungsgehäuse 4, einer darin angeordneten Halteplatte 5 für die an den Enden der flexiblen Einzeladern 1, 2 befestigten zapfenartigen Steckerteile 6 und 7 sowie einer Verbindungshülse 8, die das Kupplungsgehäuse 4 mit dem Ende des Mantelschlauches 3 verbindet. Die Steckerteile 6 sind an den dünneren Leitungsadern 1 angeschlossen, während die dickere Leitungsader 2 mit dem entsprechend stärkeren Steckerzapfen 7 versehen ist. Die Steckerteile 6 und 7 sind in bekannter Weise mittels Presshülsen 9 an den Enden der Leitungsadern 1, 2 befestigt. Die Halteplatte 5 ist als Lochplatte ausgebildet, die auf einem gemeinsamen Teilkreis Öffnungen 10 für den Durchgriff der Steckerzapfen aufweist, die sich mit einem Bund 11 rückseitig gegen die Halteplatte 5 legen. Zur Sicherung der Steckerteile 6, 7 an der Halteplatte 5 ist eine Anschlagplatte 12 vorgesehen, die mittels einer Schraube lösbar an der Rückseite der Halteplatte angeschlossen ist und die Bunde 11 mit ihrem Umfangsrand hintergreift.

Das Kupplungsgehäuse 4 ist als Überwurfmutter ausgebildet und weist ein Innengewinde 5' auf, mit welchem es an ein (nicht dargestelltes) Gegenkupplungsstück anschliessbar ist, welches Steckeröffnungen für den Eingriff der Steckerteile 6, 7 aufweist. Das Steckerteil 7 bildet zugleich einen Positionierstift, welcher den ordnungsgemässen Leitungsanschluss sicherstellt. An der Rückseite weist das Kupplungsgehäuse 4 eine Ausdrehung 13 für die Halteplatte 5 auf. Letztere ist mit einem Ringflansch 14 versehen, der sich gegen die Bodenfläche der Ausdrehung 13 abstützt.

Die Verbindungshülse 8 ist zweiteilig ausgebildet. Sie besteht aus einer Klemmhülse 15 und einer hiermit über eine Drehverbindung verbundenen Gehäuseanschlusshülse 16. Die Klemmhülse 15 umschliesst das Ende des Mantelschlauches 3 und ist mit Presssitz auf dem innenseitig durch eine Stützhülse 17 abgestützten Mantelschlauch gehalten, wie dies bekannt ist. Die Klemmhülse 15 weist einen über das Ende des Mantelschlauches 3 vorspringenden axialen Fortsatz 18 auf, der von einer zylindrischen Einziehung der Hülse gebildet ist und in das offene Ende der Gehäuseanschlusshülse 16 einfasst. An dem zylindrischen Fortsatz ist eine Umfangsnut 19 angeordnet, die sich mit einer Umfangsnut 20 an der zylindrischen Innenfläche des den Fortsatz 18 umschliessenden Endes der gehäuseanschlusshülse 16 zu einer Rille für die Aufnahme eines Schulterdrahtes 21 ergänzt. Der Schulterdraht 21 wird über eine Tangentialöffnung 22 (Fig. 4) in die Rille eingeführt. Er bewirkt eine zugfeste, jedoch drehbare Verbindung der beiden Hülsenteile 15 und 16.

Die Gehäuseanschlusshülse 16 weist an ihrem anderen Ende einen Ringflansch 23 auf, der sich gegen den Ringflansch 14 der Halteplatte 5 legt. Die Sicherung der Gehäuseanschlusshülse 16 an dem Kupplungsgehäuse 4 erfolgt mittels eines Sprengringes 24, der in eine Ringnut an der zylindrischen Innenwand der Eindrehung 13 des Kupplungsgehäuses 14 eingeführt wird. Anstelle des Sprengringes 24 könnte aber auch ein Anschlagring in die Eindrehung 13 eingeführt werden, der z.B. mittels eines Gewindes in die Eindrehung eingeschraubt oder aber ebenfalls mittels eines Schulterdrahtes in der Eindrehung lösbar festgelegt wird. Bei gelöstem Sprengring 24 od.dgl. lässt sich das Kupplungsgehäuse 4 nach vorne von der Gehäuseanschlusshülse 16 abziehen bzw. bei der Montage von vorne auf diese Hülse aufschieben.

Die Gehäuseanschlusshülse 16 weist an ihrer zylindrischen Innenwand eine axial verlaufende rillenförmige Wandeinziehung 25 auf, in welche der Bund 11 des dickeren Steckerzapfens 7 einfasst, wie dies insbesondere aus Fig. 3 zu erkennen ist. Auf diese Weise lässt sich der dickere Steckerzapfen 7 auf dem gemeinsamen Teilkreis der Steckerzapfen 6 unterbringen, ohne dass dabei der Durchmesser der Halteplatte 5, der Gehäuseanschlusshülse 16 und entsprechend auch des Kupplungsgehäuses 4 vergrössert werden muss.

Wie erwähnt, handelt es sich bei der in den Fig. 1 bis 4 gezeigten Mehrfachkupplungen um eine bevorzugte Ausführungsform der Erfindung. Der aus der Einziehung der Hülse bestehende axiale Fortsatz 18 bildet rückseitig eine Ringschulter 32 für die Abstützung des Mantelschlauches 3, der zwischen der Klemmhülse 15 und der Stützhülse 17 fest eingespannt ist. Die Wandstärke des axialen Fortsatzes 18 und des ihn übergreifenden Endes der Gehäuseanschlusshülse 16 ist grösser als im übrigen Bereich der betreffenden Hülse, so dass hier durch die Anbringung der Nuten 19, 20 keine Schwächung bewirkt wird.

**Patentansprüche**

1. Mehradriges hydraulisches oder pneumatisches Kabel mit in einem flexiblen Mantelschlauch (3) angeordneten flexiblen Leitungsadern (1, 2), die mit an ihren Enden befestigten Steckerteilen (6, 7) an eine Halteplatte (5) angeschlossen sind, die in einem, vorzugsweise als Überwurfmutter ausgebildeten Kupplungsgehäuse (4) angeordnet ist, welches mit dem Mantelschlauch (3) über eine Verbindungshülse (8) zugfest, jedoch frei drehbar verbunden ist, die aus zwei über eine Drehverbindung zugfest verbundenen, an ihren einander zugewandten Enden mit einem axialen Fortsatz (18) ineinanderfassenden Hülsenteilen (15, 16) besteht, von denen das eine Hülsenteil als eine mit dem Mantelschlauch (3) verbundene Klemmhülse (15) und das andere Hülsenteil als Gehäuseanschlusshülse (16) ausgebildet ist, die an ihrem in das Kupplungsgehäuse (4) einfassenden Ende einen die Halteplatte (5) rückwärtig abstützenden Ringflansch (23) aufweist, der sich seinerseits rückseitig gegen ein Anschlagglied des Kupplungsgehäuses (4) abstützt, dadurch gekennzeichnet, dass

- die Klemmhülse (15) und die Gehäuseanschlusshülse (16) an der Drehverbindung mittels eines lösbaren Sicherungselementes (21) leicht lösbar verbunden sind und dass
- das Kupplungsgehäuse (4) rückseitig eine Gehäuseausdrehung (13) aufweist, in die die Gehäuseanschlusshülse (16) mit ihrem Ringflansch (23) von hinten einführbar ist, wobei das Anschlagglied (24) leicht lösbar in der Gehäuseausdrehung (13) angeordnet ist.

2. Kabel nach Anspruch 1, dadurch gekennzeichnet, dass das lösbare Anschlagglied (24) aus einem Sprengring oder einem Schraubring besteht.

3. Kabel nach Anspruch 1 oder 2, dadurch gekennzeichnet, dass das Sicherungselement (21) aus einem Schulterdraht besteht, der über eine Tangentialöffnung (22) des einen Hülsenteils (16) in eine von Nuten (19, 20) der beiden Hülsenteile (15, 16) gebildete umlaufende Rille einführbar ist.

4. Kabel nach einem der Ansprüche 1 bis 3, dadurch gekennzeichnet, dass der axiale Fortsatz (18) von einer endseitigen Einziehung der Klemmhülse (15) gebildet ist, wobei die Klemmhülse (15) an dem über den Mantelschlauch (3) vorstehenden Fortsatz (18) eine grössere Wandstärke hat als auf dem den Mantelschlauch umschliessenden Bereich.

5. Kabel nach einem der Ansprüche 1 bis 4, dadurch gekennzeichnet, dass die Gehäuseanschlusshülse (16) innenseitig eine axial verlaufende rillenartige Wandeinziehung (25) für den Bund (11) eines Steckerteils (7) aufweist, dessen Durchmesser grösser ist als derjenige der anderen Steckerteile (6).

**Claims**

1. Multi-core hydraulic or pneumatic cable having flexible conduit cores (1, 2) arranged in a flexible sheath jacket (3), which are connected with plug-in parts (6, 7) secured on their ends to a retaining plate (5) which is arranged in a coupling housing (4) formed preferably as cap nut, which housing is connected fast against traction but freely rotatably through a connecting sleeve (8) with the sheath hose (3), which sleeve part consists of two sleeve parts (15, 16) connected fast against traction through a swivel joint and inter-engaging at their ends facing one another with an axial extension (18), of which sleeve parts the one is formed as a clamping sleeve (15) connected with the jacket hose (3) and the other is formed as housing connection sleeve (16), which comprises, at its end engaging in the coupling housing (4), an annular flange (23) which rearwardly supports the retaining plate (5) and in turn is rearwardly supported against a stop member of the coupling housing (4), characterised in that:

the clamping sleeve (15) and the housing connection sleeve (16) are easily disengageably connected by means of a releasable securing element (21) at the swivel connection and in that

the coupling housing (4) comprises on the rear a turned housing recess (13) into which the housing connection sleeve (16) can be inserted with its annular flange (23) from the rear, the stop member (24) being easily releasably arranged in the turned housing recess (13).

2. Cable according to Claim 1, characterised in that the releasable stop member (24) consists of a circlip or a threaded ring.

3. Cable according to Claim 1 or 2, characterised in that the securing element (21) consists of a shoulder wire which can be introduced through a tangential opening (22) of the one sleeve part (16) into a surrounding channel formed by grooves (19, 20) of the two sleeve parts (15, 16).

4. Cable according to one of Claims 1 to 3, characterised in that the axial extension (18) is formed by a terminal constriction of the clamping sleeve (15), while the clamping sleeve (15) has a greater wall thickness on the extension protruding beyond the jacket hose (3) than on the region surrounding the jacket hose.

5. Cable according to one of Claims 1 to 4, characterised in that the housing connection sleeve (16) comprises on the inner side an axially extending channel-type wall retraction (25) for the collar (11) of a plug-in part (7), the diameter of which is greater than that of the other plug-in parts (6).

**Revendications**

1. Câble multiconducteur hydraulique ou pneumatique comprenant des éléments conducteurs flexibles (1, 2) disposés dans une gaine enveloppante flexible (3), éléments qui sont raccordés par des fiches mâles (6, 7) fixées à leurs extrémités à une plaque de retenue (5) qui est disposée dans un logement d'accouplement (4) constitué de préférence sous forme d'un écrou d'accouplement, qui est relié de façon à résister à la traction mais à pouvoir tourner librement à la gaine enveloppante (3) par un manchon de liaison (8) constitué par deux parties de manchon reliées de façon résistante à la traction au moyen d'une liaison rotative et pénétrant l'une dans l'autre à leurs extrémités tournées l'une vers l'autre par un prolongement axial (18), l'une de ces parties (15, 16) étant constituée sous forme d'un manchon de serrage (15) relié à la gaine enveloppante (3) et l'autre partie de manchon étant constituée sous forme d'un manchon de raccordement (16) avec le logement et qui présente, à son extrémité entourée le logement d'accouplement (4), une collerette annulaire (23) supportant la plaque de retenue (5) par l'arrière, collerette qui s'appuie de son côté par l'arrière contre un élément de butée du logement d'accouplement, caractérisé en ce que

– le manchon de serrage (15) et le manchon de raccordement (16) avec le logement sont reliés au niveau de la liaison rotative de façon à pouvoir en être facilement dégagés au moyen d'un élément de fixation amovible (21), et en ce que

– le logement d'accouplement (4) comprend sur son côté arriére un contre-alésage (13) dans lequel le manchon de raccordement (16) avec le logement peut être introduit par l'arrière par sa collerette annulaire (23), l'organe de butée (24) étant disposé de façon à pouvoir être facilement retiré du contre-alésage (13) du logement.

2. Câble selon la revendication 1, caractérisé en ce que l'organe de raccordement amovible (24) est constitué par un anneau à ressort ou un anneau fileté.

3. Câble selon la revendication 1 ou 2, caractérisé en ce que l'élément de fixation (21) est constitué par un fil d'épaulement, qui peut être introduit par une ouverture tangentielle (22) de l'une des parties de manchon (16) dans une rainure périphérique constituée par des gorges (19, 20) des deux parties de manchon (15, 16).

4. Câble selon l'une des revendications 1 à 3, caractérisé en ce que le prolongement axial (18) est constitué par une partie en gradin de diamètre réduit à l'extrémité du manchon de serrage (15), le manchon de serrage (15) présentant au niveau du prolongement (18) qui fait saillie de la gaine enveloppante (3) une épaisseur de paroi qui est plus importante que dans la région qui entoure la gaine enveloppante.

5. Câble selon l'une des revendications 1 à 4, caractérisé en ce que le manchon de raccordement (16) avec le logement comprend à l'intérieur de sa paroi une gorge (25) en forme de rainure orientée axialement et destinée à la collerette (11) d'un élément d'enfichage (7) dont le diamètre est plus important que celui des autres éléments d'enfichage (6).

FIG.1

FIG.2

FIG.3

FIG.4